# EUROPEAN PATENT APPLICATION

(11) **EP 0 602 917 A1**
(43) Date of publication of application: **22.06.1994**
(21) Application number: 93310009.1
(22) Date of filing: 13.12.1993
(51) Int. Cl.: F16F 9/02, F16F 7/08

(54) **Strut with adjustable friction means**

(30) Priority: 15.12.1992 GB 9226114
(71) Applicant: CAMLOC (U.K.) LIMITED, Leicester LE4 7JD (GB)
(72) Inventor: Bools, Andrew, Hamilton, Leicester LE5 1TF (GB); Boote, Peter James, Manton, Leicestershire LE15 8ST (GB); Smith, Ivan Henry, Hamilton, Leicester LE5 1TE (GB)
(74) Representative: Goodenough, Nigel

(57) **Abstract**

A gas spring comprises a body (2) in which a rod (3) is telescopically mounted. A closure plug (5) is sealed to the body (2) by an O-ring (6) and slidingly and sealingly receives the rod (3). A friction collar 7 surrounds the rod (3) and, in use, is located in a tapered recess (8) formed in the plug (5). A cap (9) is mounted by screw-threads (10,11) on the body and can be adjusted to vary the force with which the collar (7) is biased into the recess (8), and thus the frictional force which resists movement of the rod (3) relative to the body (2).

## Description

This invention relates to a strut with adjustable friction means, and in the preferred embodiment of the invention provides a strut in the form of a gas spring assembly with adjustable means for varying the friction resisting movement of the rod relative to the body of the gas spring assembly.

Struts are commonly used for applying a force between two members to assist or resist movement of one member relative to the other. Such struts consist essentially of a body which, in use, is secured to one of the members and a rod telescopically mounted in the body and secured, in use, to the other of the members. Spring means are provided for acting between the rod and the body. In a particularly desirable form of strut the spring means comprises a mass of compressed gas retained within the body and acting on the rod to exert a force tending to move the rod out of the body. Such struts, commonly referred to "gas spring assemblies" are commonly used in many applications to assist raising of lids and doors.

In certain applications it is desirable that the lid or door being raised can be left supported by one or more struts at a position intermediate its fully raised and fully lowered position. To this end, it is desirable under these circumstances for the gas spring assembly to incorporate friction means which impose a significant frictional force resisting movement of the rod relative to the body. With such an arrangement, although the weight of the lid or door may be substantially balanced by the force exerted by the strut, the lid or door may remain stably in any position intermediate its fully raised and fully lowered position by virtue of the frictional force resisting movement of the rod relative to the body.

Heretofore the friction means was typically formed by internal components of the gas spring and could not be adjusted after assembly and charging of the gas spring. With such devices strict manufacturing tolerances must be observed in order to obtain a satisfactory degree of consistency in the frictional force required to move the rod relative to the housing. Also, a wide range of different assemblies need to be produced in order to cater for a wide range of different frictional requirements. Further, even if a particular strut exhibited the correct degree of frictional resistance when installed, wear of the various components of the strut could increase or reduce the imposed friction load with the result that, after some period in service, the friction load became incorrect. With the prior art, under these circumstances, the strut had to be replaced with a new strut.

The present invention obviates the problems outlined above by providing a strut in which the friction means is adjustable to vary the frictional force imposed on the rod relative to the housing.

According to the present invention there is provided a strut for applying a force between two members, the strut comprising; a body adapted to be secured to one of the members; a rod telescopically mounted in the body and adapted to be secured to the other of the members; spring means acting between the body and the rod; and friction means for resisting movement of the rod relative to the body, the friction means comprising a tapered collar slidably mounted on the rod, a recess in the body, and means for adjustably biassing the collar into the recess to selectively vary the frictional force imposed on the rod by the collar.

With such an arrangement the frictional force acting on the rod can be adjusted after manufacture of the strut thereby obviating the need for close manufacturing tolerances to maintain consistent final results. Also, after installation the frictional force can be adjusted to produce exactly the correct degree of frictional restraint to movement. If, as a result of wear or change in service conditions, the initial friction load becomes too high or too low, the friction load may be re-set to a new desired value.

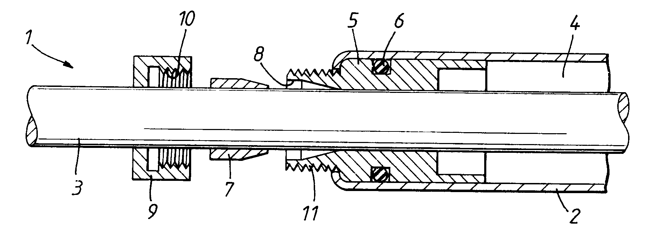

The invention will be better understood from the following description of a preferred embodiment thereof, given by way of example only, reference being had to the accompanying drawing wherein the single figure shows schematically a longitudinal cross-section of the central portion of a gas spring assembly.

Referring to the drawing, the gas spring assembly 1 comprises a body 2 provided with means (not shown) enabling the body to be secured to one of a pair of members between which a force is to be exerted. A rod 3 is telescopically mounted in the body 2 and includes, at the end remote from the body 2 means whereby the rod may be connected to the other of the members. The body 2 defines a sealed chamber 4 charged with a high pressure gas whereby the gas exerts a force on the piston rod tending to move the piston rod outwardly of the body and extend the overall length of the strut. As will be appreciated by those skilled in the art the chamber 4 will usually also contain a viscous fluid which co-operates with a head mounted on the rod 3 to damp movement of the rod relative to the body.

The rod 3 slidingly and sealingly passes through a closure plug 5 which is itself secured to the body 2 and sealed relative thereto by an O-ring seal 6. Because of the relatively close fit between the rod 3 and the plug 5 a small amount of friction tending to resist movement of the rod relative to the plug will exist. For many applications, however, this friction will be insufficient and in order to provide additional friction a tapered collar 7 is slidably mounted on the piston rod. The collar may be a simple split unitary collar, or may consist of a plurality of segments. Preferably, the collar 7 is unitary, but this is not necessarily so since if a plurality of separate segments are used these will be restrained against accidental displacement as described in more detail hereinafter.

In use, the collar 7 is located within a tapered recess 8 provided in the closure plug 5. The taper of the recess 8 is substantially complementary to the taper of the collar 7. An end cap 9 is provided for retaining the collar 7 within the recess 8 and for adjustably biassing the collar into the recess. To this end, the end cap 9 includes internal screw threads 10 which, in use, mate with external screw threads 11 provided on the body 2. By screwing the cap 9 further onto the body the collar 7 will be pushed further into the recess 8 and the engagement of the respective tapering surfaces of the recess and the collar will bias the collar more tightly into engagement with the rod and thereby increase the frictional force imposed on the rod.

In use, the various components will be assembled with cap 9 lightly screwed onto the body 2. The body will be charged with compressed gas and the position of the end cap 9 adjusted to produce the required degree of frictional resistance to movement of the rod. The gas strut assembly can then be installed into its use configuration and the frictional resistance adjusted if necessary by rotating the collar 9 to increase the force with which the collar is biassed into the recess and thereby increase the frictional resistance movement of the rod, or reduce the force with which the collar is biassed into the recess and thereby reduce the frictional force imposed on the rod.

If desired, means can be provided for locking the collar 9 in its desired position - e.g. a lock-nut, grub screw, or similar arrangement. In the alternative, a thread-locking compound may be applied to the threads 10, 11 prior to final adjustment of the frictional force.

## Claims

1. A strut for applying a force between two members, the strut comprising; a body adapted to be secured to one of the members; a rod telescopically mounted in the body and adapted to be secured to the other of the members; spring means acting between the body and the rod; and friction means for resisting movement of the rod relative to the body, the friction means comprising a tapered collar slidably mounted on the rod, a recess in the body, and means for adjustably biasing the collar into the recess to selectively vary the frictional force imposed on the rod by the collar.

2. A strut according to claim 1 wherein the recess is tapered and the taper of the recess is complementary to the taper of the collar.

3. A strut according to claim 1 or claim 2 wherein the collar is split.

4. A strut according to claim 1 or claim 2 wherein the collar comprises a plurality of segments.

5. A strut according to claim 3 or claim 4 wherein the collar is unitary.

6. A strut according to any preceding claim wherein the adjusting means comprises a cap which is screw-threadedly mounted on the body and retains the collar in the recess, the cap being rotatable relative to the body to vary the force with which the collar is biased into the recess.

7. A strut according to claim 6 wherein means are provided for locking the cap in a desired position.

8. A strut according to any preceding claim wherein the body defines a sealed chamber which is charged with high pressure gas, and wherein the recess is defined in a closure plug which is sealed relative to the body and through which the rod slidingly and sealingly passes.
